# FASCICULE DE BREVET EUROPEEN

(11) **EP 0 406 052 B1**
(45) Date de publication et mention de la délivrance du brevet: **06.03.1996**
(21) Numéro de dépôt: 90401671.4
(22) Date de dépôt: 15.06.1990
(51) Int. Cl.: G11B 5/29, G11B 5/31, G11B 5/17

(54) **Procédé de réalisation de tête magnétique multipiste, et tête magnétique multipiste**
Herstellungsverfahren eines Mehrspur-Magnetkopfes und Mehrspur-Magnetkopf
Method for making a multitrack magnetic head and multitrack magnetic head

(30) Priorité: 27.06.1989 FR 8908544
(43) Date de publication de la demande: 02.01.1991
(73) Titulaire: THOMSON-CSF, F-75008 Paris (FR)
(72) Inventeur: Maurice, François, F-92045 Paris la Défense (FR); Coutellier, Jean-Marc, F-92045 Paris la Défense (FR); Penot, Maurice, F-92045 Paris la Défense (FR); Bussac, Claude, F-92045 Paris la Défense (FR); Meunier, Paul-Louis, F-92045 Paris la Défense (FR)
(74) Mandataire: Chaverneff, Vladimir

(56) Documents cités:
- DE-A- 2 850 922
- FR-A- 2 605 783
- FR-A- 2 622 336
- FR-A- 2 622 340
- FR-A- 2 630 853

## Description

La présente invention se rapporte à un procédé de réalisation de tête magnétique multipiste et à une tête magnétique multipiste.

Pour réaliser des têtes magnétiques multipistes, on fait généralement appel à une technologie mixte : technologie massive pour le circuit magnétique et les bobinages, et technologie des couches minces pour les pôles. Le circuit magnétique en ferrite, comporte une plaque de base de laquelle font saillie des plots séparés par des rainures et disposés en réseau régulier. Les pôles en matériau magnétique, sont formés sur ces plots en les reliant en diagonale par-dessus l'espace inter-plots, un entrefer étroit (généralement inférieur à 1 micron) étant ménagé au milieu de ces pôles. On obtient ainsi un réseau dense de micro-têtes magnétiques.

On connaît plusieurs procédés de fabrication de telles têtes magnétiques. Le circuit magnétique en ferrite peut être réalisé par rainurage mécanique d'un substrat, remplissage des rainuires avec un matériau non magnétique tel que du verre, et polissage de la face supérieure du substrat ainsi rempli. On peut alors déposer sur cette face polie le réseau de pôles. Ce dépôt peut être réalisé selon la technique des couches minces, avec des étapes de polissage (voir par exemple Demande de Brevet français 86 14974).

Les fils de commande du réseau de têtes magnétiques peuvent être noyés dans le verre de remplissage des rainures pratiquées dans le substrat. Un tel procédé présente des inconvénients : le fil conducteur noyé dans le verre doit avoir un coefficient de dilatation proche de celui du verre et du ferrite, ce qui exclut l'utilisation du cuivre ; les hautes températures (supérieures à 600°C) nécessaires à la fusion du verre, interdisent l'utilisation de fils isolés, ce qui rend difficile la réalisation de têtes matricielles bobinées ; le rainurage mécanique, réalisé avec une meule classique, produit des rainures à section rectangulaire, alors que la recherche de la meilleure efficacité des têtes magnétiques conduirait à rétrécir ces rainures au niveau des pôles et la présence des fils sortant du substrat présente une grande gêne lors de la formation des pôles par la technique des couches minces.

On connaît d'après les Demandes de Brevets français 87 14 820 et 87 14824 des procédés de réalisation de têtes magnétiques selon lesquels on pratique dans le substrat de ferrite des rainures en forme de "V", et on les remplit partiellement de verre, ce qui élimine une partie des inconvénients précités grâce au rétrécissement des rainures au voisinage des pôles et à la subsistance d'un espace libre dans les rainures permettant de réaliser le bobinage en dernier lieu. Cependant, la mise en oeuvre de ces procédés est délicate, du fait que le premier polissage doit être pratiqué avec une très grande précision, car la largeur des rainures, qui est un paramètre critique des têtes magnétiques, en dépend fortement. En outre, il est difficile, sinon impossible de contrôler le remplissage partiel des rainures, en particulier dans le cas des têtes multipistes.

Une tête magnétique multipiste et son procédé de réalisation sont divulgués dans le document DE-A-2850922 utilisant uniquement une technologie dite "massive" mentionnée plus haut.

La présente invention a pour objet un procédé de réalisation de têtes magnétiques multipistes permettant d'obtenir, au niveau des pôles, des rainures étroites, afin d'avoir en particulier une bonne efficacité des têtes à l'écriture, et de bobiner les conducteurs en fin de processus, afin de pouvoir utiliser du fil émaillé.

La présente invention a également pour objet une tête magnétique multipiste présentant, dans son circuit magnétique, au niveau des pôles, un intervalle entre branches du circuit magnétique le plus faible possible sans nuire à l'efficacité des têtes et permettant le passage facile des fils de bobinage.

Le procédé conforme à l'invention, appliqué à la réalisation de têtes magnétiques multipistes à pluralité de têtes du type comprenant un circuit magnétique fermé sur un entrefer par l'intermédiaire de deux pôles en couche mince en matériau à perméabilité supérieure à celle dudit circuit magnétique, consiste à :
- pratiquer un premier réseau de rainures sur un premier pavé de substrat de manière à former un premier groupe de plots ;
- pratiquer un second réseau de rainures sur un second pavé de substrat de manière à former un second groupe de plots de telle sorte que les centres des plots coincident avec les centres des plots du premier groupe de plots ;
- remplir les rainures du premier réseau de rainures d'un matériau non magnétique ;
- assembler les premier et second pavés de façon que leurs faces rainurées soient en vis-à-vis et que les centres respectifs de chacun des plots se faisant face coïncident ;
- supprimer par rectification et polissage l'embase du premier groupe de plots formés sur le premier pavé en ne laissant subsister que ces plots et le matériau les séparant,
- former des pôles en couche mince sur le premier réseau de rainures remplies ;
- à passer des fils de bobinage dans le second réseau de rainures ; et,
selon un autre aspect de l'invention, le procédé de réalisation de tête magnétique multipiste à pluralité de têtes comprenant un circuit magnétique fermé sur un entrefer par l'intermédiaire de deux pôles en couche mince en matériau à perméabilité magnétique supérieure à celle dudit circuit magnétique, consiste à :
- pratiquer un premier réseau de rainures sur un premier pavé de substrat de manière à former un premier groupe de plots ;
- pratiquer un second réseau de rainures sur un second pavé de substrat de manière à former un second groupe de plots de telle sorte que les centres des plots coincident avec les centres des plots du premier groupe de plots ;
- remplir les rainures du premier réseau de rainures d'un matériau non magnétique ;
- former des pôles en couches minces sur le premier réseau de rainures remplies ;
- supprimer l'embase du premier pavé par rectification et éventuellement polissage jusqu'à laisser apparaître ledit matériau non magnétique ;
- passer des fils de bobinage dans le second réseau de rainures ;
- assembler les premiers et seconds pavés, la face rainurée du second pavé étant appliquée contre la face du premier pavé ne comportant pas les pôles de façon que leurs faces rainurées soient en vis à vis et que les centres respectifs de chacun des plots se faisant face coïncident. Selon une variante de l'invention, le procédé consiste à :
- pratiquer un premier réseau de rainures dans une première face d'un pavé de substrat de manière à former un premier groupe de plots ;
- à remplir les rainures du premier réseau de rainures avec un matériau non magnétique ;
- à former des pôles en couche mince sur le premier réseau rempli ;
- à former dans la seconde face dudit pavé un second réseau de rainures de manière à faire apparaître le matériau magnétique et à former un second groupe de plots dont les centres coïncident respectivement avec les centres des plots du premier groupe de plots ;
- à coller sur la deuxième face du substrat un deuxième pavé de même surface et de même forme ; et
- à passer des fils de bobinage dans le second réseau de rainures.

La tête magnétique multipiste conforme à l'invention est caractérisée par le fait qu'elle comporte successivement : une couche de pôles en couche mince en matériau magnétique, une première couche de plots en matériau magnétique à perméabilité plus faible que celle du matériau constituant les pôles séparés par du matériau non magnétique, une deuxième couche de plots en matériau magnétique similaire à celui des plots de la première couche, une couche massive de matériau magnétique similaire à celui des plots de la première couche, et des fils de bobinage entourant ladite couche massive.

La présente invention sera mieux comprise à la lecture de la description détaillée de plusieurs modes de réalisation, pris comme exemples non limitatifs et illustrés par le dessin annexé sur lequel :
- les figures 1 à 8 sont des vues simplifiées en coupe de substrats illustrant un premier mode de réalisation conforme à l'invention ;
- les figures 9 à 11 sont des vues de dessus de substrats à différentes étapes dudit premier mode de réalisation, montrant les formes et dispositions des réseaux de rainures ;
- les figures 12 à 16 sont des vues simplifiées en coupe de substrats illustrant un second mode de réalisation conforme à l'invention ; et
- les figures 17 à 20 sont des vues simplifiées en coupe de substrats illustrant un troisième de réalisation conforme à l'invention.

On va décrire ci-dessous les étapes essentielles de fabrication, selon trois modes de réalisation de l'invention, d'une tête magnétique multipiste, en particulier d'une tête multipiste d'enregistrement à adressage matriciel. Une telle tête magnétique peut comporter par exemple un réseau dense de 256 micro-têtes pour lire une bande magnétique de largeur habituelle.

Les caractéristiques communes à ces trois modes de réalisation sont la fabrication de deux réseaux distincts de rainures pratiqués dans des faces différentes du circuit magnétique et mis en correspondance, et le remplissage total par un matériau non magnétique de l'un des réseaux de rainures, les fils de bobinage étant disposés dans l'autre réseau de rainures.

Selon le premier mode de réalisation, on réalise les opérations suivantes :
- on part d'un pavé de substrat 1 en ferrite de forme carrée ou légèrement trapézoïdale, de relativement grande épaisseur (d'environ 2 mm par exemple). Bien entendu, ce substrat individuel peut faire partie d'une plaque de grandes dimensions incluant plusieurs substrats qui sont usinés simultanément puis séparés par sciage de la grande plaque.

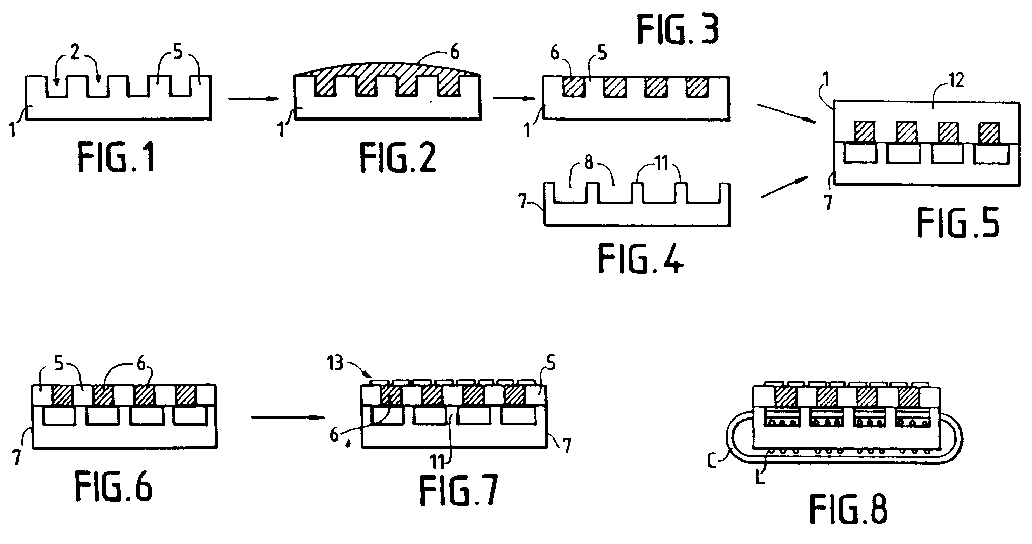

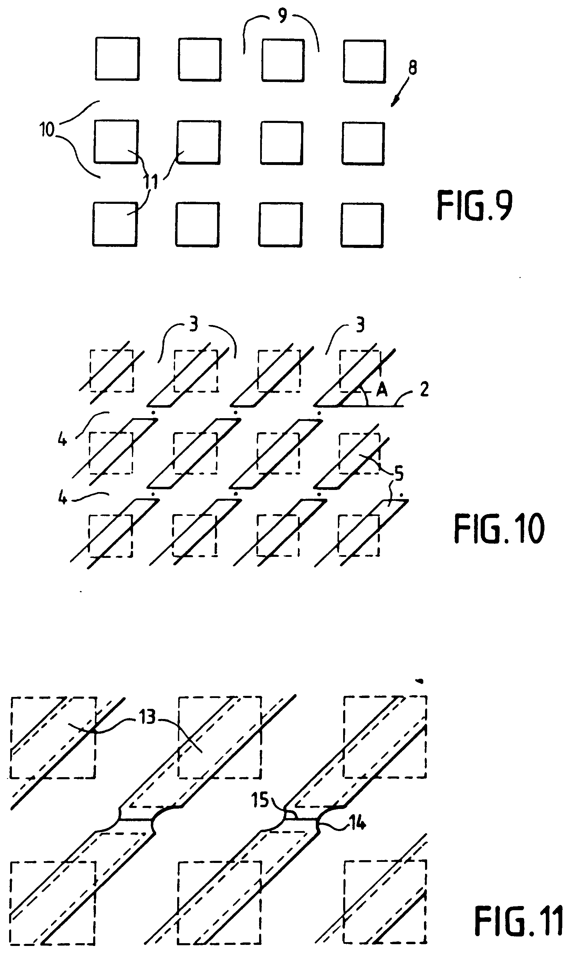

Dans une face du pavé 1, on pratique un réseau 2 de rainures délimitant les plots des têtes magnétiques formées ultérieurement (figure 1). Ce réseau 2 est par exemple tel que représenté en traits continus sur la figure 10. Le réseau 2 de la figure 10 comprend une première série de rainures 3 parallèles entre elles, et une deuxième série de rainures 4, également parallèles entre elles, mais moins larges que les rainures 3. Les rainures 3 font par rapport aux rainures 4 un angle A, qui est, dans un exemple de réalisation préféré, d'environ 45 à 90°. On détermine ainsi sur le substrat 1 un réseau de plots parallèles en forme de parallélogrammes allongés 5.

Dans un exemple de réalisation, la largeur des rainures 3 est d'environ 100 µm et la distance entre deux rainures 3 consécutives est d'environ 50 µm ; et la largeur des rainures 4 est d'environ 50 µm et la distance entre deux rainures 4 consécutives est d'environ 100 µm. La profondeur des rainures 3 et 4 est par exemple d'environ 200 µm pour un substrat 1 d'une épaisseur d'environ 2 mm. Il est toutefois bien entendu que le réseau 2 peut avoir d'autres formes géométriques adaptées aux formes des pôles que l'on veut obtenir.
- On remplit ensuite le réseau de rainures 2 d'un matériau non magnétique 6 tel que le verre (figure 2). Pour avoir la certitude que les rainures sont toutes remplies, on fait légèrement déborder le matériau 6.
- On aplanit ensuite la face supérieure du substrat 1 en enlevant l'excès de matériau 6 et en mettant ainsi à nu les plots 5 (figure 3).
- Par ailleurs, on pratique dans un autre pavé de substrat 7, réalisé dans le même matériau que le pavé 1 (du ferrite dans le cas présent), un réseau 8 de rainures (figure 4). Le pavé 7 a, de préférence, les mêmes dimensions et forme que le pavé 1. Le pavé 7, peut également être découpé dans une grande plaque comportant plusieurs pavés Identiques usinés en même temps.

Le réseau 8 de rainures comporte une première série de rainures 9 parallèles entre elles, et une seconde série de rainures 10, également parallèles entre elles. De préférence, les rainures 10 sont sensiblement orthogonales aux rainures 9 et ont les mêmes dimensions qu'elles. De préférence également, la largeur des rainures 9 et 10 est sensiblement égale à la distance entre deux rainures consécutives de la même série, ce qui détermine sur le pavé 7 des plots 11 de forme carrée. Selon un mode de réalisation, la largeur des rainures 9 et 10 est d'environ 75 µm, et leur profondeur d'environ 75 µm pour un pavé d'une épaisseur d'environ 2 mm.

Les réseaux 2 et 8 sont mis en correspondance, c'est-à-dire qu'ils sont réalisés de telle façon que lorsqu'on superpose les pavés 1 et 7 en faisant coïncider leurs côtés respectifs, les centres des plots 5 coïncident avec les centres des plots 11 (voir la figure 10 sur laquelle les plots 11 sont tracés en traits interrompus).

Ensuite on assemble par collage un pavé 1 et un pavé 7 de façon que leurs faces rainurées soient en vi-à-vis et que leurs côtés respectifs soient coplanaires (figure 5). Ceci est rendu possible grâce au fait qu'une partie non négligeable de la surface des plots 5 coïncide avec la partie également non négligeable de la surface des plots 11 (voir figure 10).

L'étape suivante consiste à supprimer par rectification et poils sage l'embase 12 des plots 5, en ne laissant subsister que ces plots 5 et le matériau 6 les séparant (figure 6).

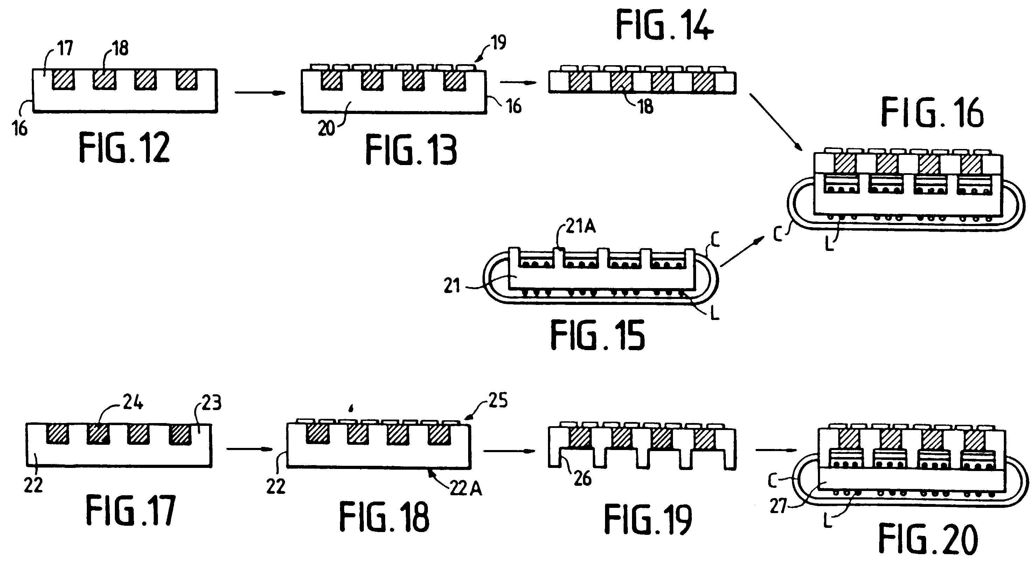

On forme ensuite (figure 7) un réseau de pôles 13 sur la surface polie des plots 5 et du matériau 6. Dans l'exemple représenté en figure 11, les pôles 13 ont approximativement la forme de parallélogrammes allongés coïncidant sensiblement avec les plots 5. A la différence des plots 5 qui sont, dans chaque ligne de plots, séparés par les rainures 4 relativement larges, les pôles 13 adjacents d'une même ligne de pôles se rejoignent par un étranglement 14 coupé en son milieu par un entrefer 15 très étroit (ordre de grandeur : 1 micron ou moins). Cet entrefer peut être parallèle à la direction des rainures 4 ou former avec cette direction un angle allant jusqu'à 45°.

Les pôles 13 sont avantageusement formés selon une technologie planaire, telle que décrite par exemple dans la Demande de Brevet français 88 05592. Ces pôles sont en matériau magnétique à faible réluctance comme par exemple le Sendust ou le Permalloy. Leur largeur, en-dehors de la zone de l'étranglement 14, est sensiblement égale à celle des plots 11.

La dernière étape consiste à passer dans le réseau de rainures 8 les fils de lignes L et de colonnes C de la tête matricielle ainsi réalisée. Ces fils peuvent être en cuivre émaillé grâce au fait que cette étape de bobinage est la dernière étape de fabrication de la tête.

Selon le second mode de réalisation, illustré par les figures 12 à 16, on amincit le pavé à rainures remplies de verre avant de le coller à l'autre pavé, et on bobine les fils sur cet autre pavé également avant collage. Dans le détail, les différentes étapes de ce second mode de réalisation sont les suivantes :
- rainurage du premier pavé 16 (même réseau de rainures que le réseau 2), remplissage des rainures 17 avec du verre 18, aplanissement de l'excès de verre, polissage (figure 12).
- dépôt des pôles 19 de la même façon que pour les pôles 13 (figure 13).
- suppression de l'embase 20 du pavé 16 par rectification et éventuellement poils sage pour laisser apparaître le verre 18 (figure 14).
- rainurage du deuxième pavé 21 (même réseau de rainures que le réseau 8) et bobinage des fils de lignes L et de colonnes C (figure 15).
- collage des deux pavés, la face rainurée du pavé 21 étant appliquée contre la face du pavé 16 ne comportant pas les pôles 19 (figure 16).

Selon le troisième mode de réalisation, illustré par les figures 17 à 20, les deux réseaux de rainures sont pratiqués dans le même pavé, d'un côté et de l'autre de ce pavé et sont donc mis en correspondance sans avoir à faire de collage de pavés. Le second pavé n'a pas besoin d'être rainuré et sert de couvercle à la face du premier pavé dans laquelle sont pratiquées les rainures pour les fils. Toutefois, selon une variante (non représentée) on pratique des rainures moins profondes dans la face 22A, et on pratique des rainures symétriques de celles du deuxième réseau dans le couvercle.

Dans le détail, les différentes étapes de ce troisième mode de réalisation sont les suivantes :
- rainurage d'une première face du premier pavé 22 (même réseau de rainures que le réseau 2), remplissage des rainures 23 avec du verre 24, aplanissement de l'excès de verre, polissage (figure 17).
- dépôt des pôles de la même façon que pour les pôles 13 (figure 18).
- rainurage de la seconde face 22A du premier pavé 22 avec un réseau de rainures 26 identique au réseau 8 (figure 19). Le fond des rainures 26 doit au moins rejoindre le fond des rainures 23 (comme représenté sur la figure 19).
- collage sur la face 22A d'un couvercle 27, en ferrite, de mêmes forme et surface que le pavé 22 d'origine, et d'une épaisseur d'environ 1 mm.
- bobinage des fils de lignes L et de colonnes C.

Selon une variante du procédé de l'invention, les fils de lignes et de colonnes peuvent être déposés, par exemple par électrolyse.

Ainsi, grâce au procédé de l'invention, on manipule toujours des pièces massives non fragilisées par un double rainurage ou un amincissement excessif (dans le troisième mode de réalisation, à l'étape de la figure 19, les premières rainures 23 sont remplies de verre, sur une épaisseur suffisante pour la rigidité de l'ensemble), et les fils sont bobinés à la fin du processus, ce qui facilite la réalisation des étapes antérieures.

## Revendications

1. Procédé de réalisation de tête magnétique multipiste à pluralité de têtes du type comprenant un circuit magnétique fermé sur un entrefer par l'intermédiaire de deux pôles en couche mince en matériau à perméabilité supérieure à celle dudit circuit magnétique, consistant à :
- pratiquer un premier réseau de rainures (2) sur un premier pavé de substrat (1, 16) de manière à former un premier groupe de plots (5) ;
- pratiquer un second réseau de rainures (8) sur un second pavé de substrat (7. 21) de manière à former un second groupe de plots (11, 21A) de telle sorte que les centres des plots coincident avec les centres des plots du premier groupe de plots ;
- remplir les rainures du premier réseau de rainures (2) d'un matériau non magnétique (6, 18) ;
- assembler les premier et second pavés de façon que leurs faces rainurées soient en vis-à-vis et que les centres respectifs de chacun des plots se faisant face coïncident ;
- supprimer par rectification et polissage l'embase du premier groupe de plots formés sur le premier pavé en ne laissant subsister que ces plots et le matériau les séparant ;
- former des pôles en couche mince (13, 19, 25) sur le premier réseau (2) de rainures remplies ; et,
- à passer des fils de bobinage (L, C) dans le second réseau de rainures (8).

2. Procédé selon la revendication 1, caractérisé par le fait que le premier pavé (1) dans lequel est pratiqué le premier réseau de rainures (2) et qui est rempli de matériau non magnétique est aplani, et qu'après avoir pratiqué le second réseau de rainures (8) dans le second pavé (7), les deux pavés sont assemblés par collage, leurs faces rainurées étant en vis-à-vis , puis l'embase (12) du premier pavé est supprimée par rectification et polissage, et les pôles (13) sont formés sur la face polie du premier pavé.

3. Procédé de réalisation de tête magnétique multipiste à pluralité de têtes du type comprenant un circuit magnétique fermé sur un entrefer par l'intermédiaire de deux pôles en couche mince en matériau à perméabilité supérieure à celle dudit circuit magnétique,
consistant à :
- pratiquer un premier réseau de rainures (2) sur un premier pavé de substrat (16) de manière à former un premier groupe de plots ;
- pratiquer un second réseau de rainures (8) sur un second pavé de substrat (21) de manière à former un second groupe de plots (21A) de telle sorte que les centres des plots coincident avec les centres des plots du premier groupe de plots ;
- remplir les rainures du premier réseau de rainures (2) d'un matériau non magnétique (18) ;
- former des pôles en couches minces (19) sur le premier réseau (2) de rainures remplies ;
- supprimer l'embase (20) du premier pavé (16) par rectification et éventuellement polissage jusqu'à laisser apparaître ledit matériau non magnétique (18) ;
- passer des fils de bobinage dans le second réseau de rainures (8) ;
- assembler les premiers et seconds pavés, la face rainurée du second pavé étant appliquée contre la face du premier pavé ne comportant pas les pôles de façon que leurs faces rainurées soient en vis à vis et que les centres respectifs de chacun des plots se faisant face coïncident.

4. Procédé de réalisation de tête magnétique multipiste à pluralité de têtes comprenant un circuit magnétique fermé sur un entrefer par l'intermédiaire de deux pôles en couche mince en matériau à perméabilité magnétique supérieure à celle dudit circuit magnétique, consistant à :
- pratiquer un premier réseau de rainures (24) dans une première face d'un pavé de substrat (22) de manière à former un premier groupe de plots ;
- à remplir les rainures (23) du premier réseau de rainures avec un matériau non magnétique (24) ;
- à former des pôles en couche mince (25) sur le premier réseau rempli ;
- à former dans la seconde face (22A) dudit pavé un second réseau de rainures (26) de manière à faire apparaître le matériau non magnétique et à former un second groupe de plots dont les centres coïncident respectivement avec les centres des plots du premier groupe de plots ;
- à coller sur la deuxième face du substrat un deuxième pavé (27) de même surface et de même forme ; et
- à passer des fils de bobinage (L, C) dans le second réseau de rainures.

5. Procédé selon la revendication 4, caractérisé par le fait que les rainures du second réseau de rainures sont moins profondes que celles du premier réseau, et que l'on pratique dans le deuxième pavé des rainures symétriques de celles du deuxième réseau.

6. Procédé selon l'une des revendications 1 à 4, caractérisé par le fait que le premier réseau de rainures comprend deux séries de rainures (3, 4), les rainures étant parallèles entre elles dans chacune des séries, les rainures de l'une des séries (3) étant plus larges que les rainures de l'autre série.

7. Procédé selon la revendication 6, caractérisé par le fait que les rainures de l'une des séries font un angle (A) d'environ 45 à 90° par rapport aux rainures de l'autre série.

8. Procédé selon l'une des revendications précédentes, caractérisé par le fait que le second réseau de rainures comprend deux séries de rainures (9, 10), les rainures étant parallèles entre elles dans chacune des séries, chacune des séries de rainures ayant la même largeur, les rainures de l'une des séries étant sensiblement orthogonales aux rainures de l'autre série.

9. Procédé selon l'une des revendications précédentes, caractérisé par le fait que le matériau constituant les pavés est du ferrite.

10. Procédé selon l'une des revendications précédentes, caractérisé par le fait que le matériau non magnétique est du verre.

11. Procédé selon l'une des revendications précédentes, caractérisé par le fait que le matériau constituant les pôles est du Sendust ou du Permalloy.

12. Procédé selon l'une des revendications 6 à 11, caractérisé par le fait que dans le premier réseau de rainures, les rainures de l'une des séries ont une largeur d'environ 100 µm et les rainures de l'autre série ont une largeur d'environ 50 µm.

13. Procédé selon l'une des revendications 8 à 12, caractérisé par le fait que dans le second réseau de rainures, les rainures ont une largeur d'environ 75 µm.

14. Procédé selon l'une des revendications précédentes, caractérisé par le fait que les fils de bobinage sont déposés par électrolyse.

15. Tête magnétique multipiste, caractérisée par le fait qu'elle comporte successivement: une couche de pôles en couche mince en matériau magnétique (13, 19, 25), une première couche de plots en matériau magnétique à perméabilité plus faible que celle du matériau constituant les pôles (5, 16, 22) séparés par du matériau non magnétique (6, 18, 24), une deuxième couche de plots en matériau magnétique similaire à celui de plots de la première couche (11, 21, 22), une couche massive de matériau magnétique similaire à celui de plots de la première couche (7, 21, 27), et des fils de bobinage (L, C) entourant ladite couche massive.

## Patentansprüche

1. Verfahren zur Herstellung eines Mehrspur-Magnetkopfs mit mehreren Köpfen des Typs mit einem Magnetkreis, der über einen Luftspalt mittels zweier Dünnschichtpole geschlossen ist, die aus einem Material bestehen, dessen Permeabilität größer als diejenige des Magnetkreises ist, bestehend in:
- Bilden eines ersten Nutennetzes (2) auf einem ersten Substratblock (1, 16) in der Weise, daß eine erste Gruppe von Klötzchen (5) geformt wird;
- Bilden eines zweiten Nutennetzes (8) auf einem zweiten Substratblock (7, 21) in der Weise, daß eine zweite Gruppe von Klötzchen (11, 21A) derart geformt wird, daß die Mitten der Klötzchen mit den Mitten der Klötzchen der ersten Gruppe von Klötzchen zusammenfallen;
- Füllen der Nuten des ersten Nutennetzes (2) mit einem nichtmagnetischen Material (6, 18);
- Zusammenfügen des ersten und des zweiten Blocks in der Weise, daß ihre genuteten Flächen einander gegenüberliegen und die jeweiligen Mitten jedes der einander zugewandten Klötzchen zusammenfallen;
- Entfernen des Sockels der ersten Gruppe von auf dem ersten Block gebildeten Klötzchen durch Schleifen und Polieren, so daß nur diese Klötzchen und das sie trennende Material bestehen bleiben;
- Bilden von Dünnschichtpolen (13, 19, 25) auf dem ersten Netz (2) gefüllter Nuten; und
- Einbringen von Wicklungsdrähten (L, C) in das zweite Nutennetz (8).

2. Verfahren nach Anspruch 1, dadurch gekennzeichnet, daß der erste Block (1), in dem das erste Nutennetz (2) gebildet wird und der mit nichtmagnetischem Material gefüllt ist, planiert wird und daß nach dem Bilden des zweiten Nutennetzes (8) in dem zweiten Block (7) die beiden Blöcke durch Kleben zusammengefügt werden, wobei ihre genuteten Flächen einander gegenüberliegen, daß dann der Sockel (12) des ersten Blocks durch Schleifen und Polieren entfernt wird und daß die Pole (13) auf der polierten Fläche des ersten Blocks geformt werden.

3. Verfahren zur Herstellung eines Mehrspur-Magnetkopfs mit mehreren Köpfen des Typs mit einem Magnetkreis, der über einen Luftspalt mittels zweier Dünnschichtpole geschlossen ist, die aus einem Material bestehen, dessen Permeabilität größer als diejenige des Magnetkreises ist, bestehend in:
- Bilden eines ersten Nutennetzes (2) auf einem ersten Substratblock (16) in der Weise, daß eine erste Gruppe von Klötzchen geformt wird;
- Bilden eines zweiten Nutennetzes (8) auf einem zweiten Substratblock (21) in der Weise, daß eine zweite Gruppe von Klötzchen (21A) derart geformt wird, daß die Mitten der Klötzchen mit den Mitten der Klötzchen der ersten Gruppe von Klötzchen zusammenfallen;
- Füllen der Nuten des ersten Nutennetzes (2) mit einem nichtmagnetischen Material (18);
- Bilden von Dünnschichtpolen (19) auf dem ersten Netz (2) gefüllter Nuten;
- Entfernen des Sockels (20) des ersten Blocks (16) durch Schleifen und eventuell Polieren, bis das nichtmagnetische Material freigelegt ist;
- Einbringen von Wicklungsdrähten in das zweite Nutennetz (8);
- Zusammenfügen des ersten und des zweiten Blocks, wobei die genutete Fläche des zweiten Blocks an die nicht mit den Polen versehene Fläche des ersten Blocks angelegt wird, so daß ihre genuteten Flächen einander gegenüberliegen und die jeweiligen Mitten jedes der einander zugewandten Klötzchen zusammenfallen.

4. Verfahren zur Herstellung eines Mehrspur-Magnetkopfs mit mehreren Köpfen des Typs mit einem Magnetkreis, der über einen Luftspalt mittels zweier Dünnschichtpole geschlossen ist, die aus einem Material bestehen, dessen Permeabilität größer als diejenige des Magnetkreises ist, bestehend in:
- Bilden eines ersten Nutennetzes (24) in einer ersten Fläche eines Substratblocks (22) in der Weise, daß eine erste Gruppe von Klötzchen geformt wird;
- Füllen der Nuten (23) des ersten Nutennetzes mit einem nichtmagnetischen Material (24);
- Bilden von Dünnschichtpolen (25) auf dem gefüllten ersten Netz;
- Bilden eines zweiten Nutennetzes (26) in der zweiten Fläche (22A) des Substratblocks in der Weise, daß das nichtmagnetische Material freigelegt wird und eine zweite Gruppe von Klötzchen geformt wird, deren Mitten jeweils mit den Mitten der Klötzchen der ersten Gruppe von Klötzchen zusammenfallen;
- Aufkleben eines zweiten Blocks (27) von gleicher Fläche und gleicher Form auf die zweite Fläche des Substrats; und
- Einbrigen von Wicklungsdrähten (L, C) in das zweite Nutennetz.

5. Verfahren nach Anspruch 4, dadurch gekennzeichnet, daß die Nuten des zweiten Nutennetzes weniger tief sind als die Nuten des ersten Netzes, und daß in dem zweiten Block Nuten gebildet werden, die zu denjenigen des ersten Netzes symmetrisch sind.

6. Verfahren nach einem der Ansprüche 1 bis 4, dadurch gekennzeichnet, daß das erste Nutennetz zwei Reihen von Nuten (3, 4) enthält, wobei die Nuten in jeder der Reihen zueinander parallel sind und die Nuten einer der Reihen (3) breiter als die Nuten der anderen Reihe sind.

7. Verfahren nach Anspruch 6, dadurch gekennzeichnet, daß die Nuten einer der Reihen einen Winkel (A) von etwa 45 bis 90° mit den Nuten der anderen Reihe bilden.

8. Verfahren nach einem der vorhergehenden Ansprüche, dadurch gekennzeichnet, daß das zweite Nutennetz zwei Reihen von Nuten (9, 10) enthält, wobei die Nuten in jeder der Reihen zueinander parallel sind, jede der Nutenreihen die gleiche Breite hat und die Nuten einer der Reihen im wesentlichen senkrecht zu den Nuten der anderen Reihe sind.

9. Verfahren nach einem der vorhergehenden Ansprüche, dadurch gekennzeichnet, daß das die Blöcke bildende Material Ferrit ist.

10. Verfahren nach einem der vorhergehenden Ansprüche, dadurch gekennzeichnet, daß das nichtmagnetische Material Glas ist.

11. Verfahren nach einem der vorhergehenden Ansprüche, dadurch gekennzeichnet, daß das die Pole bildende Material Sendust oder Permalloy ist.

12. Verfahren nach einem der Ansprüche 6 bis 11, dadurch gekennzeichnet, daß in dem ersten Nutennetz die Nuten einer der Reihen eine Breite von etwa 100 µm und die Nuten der anderen Reihe eine Breite von etwa 50 µm haben.

13. Verfahren nach einem der Ansprüche 8 bis 12, dadurch gekennzeichnet, daß in dem zweiten Nutennetz die Nuten eine Breite von etwa 75 µm haben.

14. Verfahren nach einem der vorhergehenden Ansprüche, dadurch gekennzeichnet, daß die Wicklungsdrähte durch Elektrolyse aufgebracht werden.

15. Mehrspur-Magnetkopf, dadurch gekennzeichnet, daß er der Reihe nach enthält: eine Schicht von Dünnschichtpolen aus magnetischem Material (13, 19, 25), eine erste Schicht von Klötzchen aus magnetischem Material mit einer Permeabilität, die geringer als diejenige des Materials der Pole (5, 16, 22) ist, die durch nichtmagnetisches Material (6, 18, 24) voneinander getrennt sind, eine zweite Schicht von Klötzchen aus magnetischem Material, das demjenigen der Klötzchen der ersten Schicht (11, 21, 22) ähnlich ist, eine massive Schicht aus magnetischem Material, das demjenigen der Klötzchen der ersten Schicht (7, 21, 27) ähnlich ist, und Wicklungsdrähte (L, C), die die massive Schicht umgeben.

## Claims

1. Process for producing a multitrack magnetic head having a plurality of heads, of the type comprising a magnetic circuit closed around an air gap by means of two thin-film poles made of material having a permeability greater than that of the said magnetic circuit, consisting in:
- making a first array of grooves (2) on a first substrate block (1, 16) so as to form a first group of studs (5);
- making a second array of grooves (8) on a second substrate block (7, 21) so as to form a second group of studs (11, 21A) in such a way that the centres of the studs coincide with the centres of the studs of the first group of studs;
- filling the grooves of the first array of grooves (2) with a non-magnetic material (6, 18);
- joining the first and second blocks so that their grooved faces are opposite each other and so that the respective centres of each of the facing studs coincide;
- removing, by grinding and polishing, the base of the first group of studs formed on the first block, leaving only these studs and the material separating them;
- forming thin-film poles (13, 19, 25) on the first array (2) of filled grooves; and
- in passing winding wires (R, C) through the second array of grooves (8).

2. Process according to Claim 1, characterized in that the first block (1), in which the first array of grooves (2) is made and which is filled with non-magnetic material, is rendered plane and that, after having made the second array of grooves (8) in the second block (7), the two blocks are joined by adhesive bonding, their grooved faces being opposite each other, then the base (12) of the first block is removed by grinding and polishing and the poles (13) are formed on the polished face of the first block.

3. Process for producing a multitrack magnetic head having a plurality of heads, of the type comprising a magnetic circuit closed around an air gap by means of two thin-film poles made of material having a permeability greater than that of the said magnetic circuit, consisting in:
- making a first array of grooves (2) on a first substrate block (16) so as to form a first group of studs;
- making a second array of grooves (8) on a second substrate block (21) so as to form a second group of studs (21A) in such a way that the centres of the studs coincide with the centres of the studs of the first group of studs;
- filling the grooves of the first array of grooves (2) with a non-magnetic material (18);
- forming thin-film poles (19) on the first array (2) of filled grooves;
- removing the base (20) of the first block (16) by grinding and possibly polishing until the said non-magnetic material (18) is revealed;
- passing winding wires through the second array of grooves (8);
- joining the first and second blocks, the grooved face of the second block being applied against that face of the first block not containing the poles so that their grooved faces are opposite each other and so that the respective centres of each of the facing studs coincide.

4. Process for producing a multitrack magnetic head having a plurality of heads, comprising a magnetic circuit closed around an air gap by means of two thin-film poles made of material having a magnetic permeability greater than that of the said magnetic circuit, consisting in:
- making a first array of grooves (24) in a first face of a substrate block (22) so as to form a first group of studs;
- filling the grooves (23) of the first array of grooves with a non-magnetic material (24);
- forming thin-film poles (25) on the filled first array;
- forming a second array of grooves (26) in the second face (22A) of the said block so as to reveal the non-magnetic material and to form a second group of studs, the centres of which coincide respectively with the centres of the studs of the first group of studs;
- adhesively bonding a second block (27), of the same area and of the same shape, to the second face of the substrate; and
- passing winding wires (R, C) through the second array of grooves.

5. Process according to Claim 4, characterized in that the grooves of the second array of grooves are shallower than those of the first array and in that grooves symmetrical with those of the second array are made in the second block.

6. Process according to one of Claims 1 to 4, characterized in that the first array of grooves comprises two series of grooves (3, 4), the grooves being mutually parallel in each of the series, the grooves of one of the series (3) being wider than the grooves of the other series.

7. Process according to Claim 6, characterized in that the grooves of one of the series make an angle (A) of approximately 45 to 90° with respect to the grooves of the other series.

8. Process according to one of the preceding claims, characterized in that the second array of grooves comprises two series of grooves (9, 10), the grooves being mutually parallel in each of the series, each of the series of grooves having the same width, the grooves of one of the series being substantially orthogonal to the grooves of the other series.

9. Process according to one of the preceding claims, characterized in that the material constituting the blocks is ferrite.

10. Process according to one of the preceding claims, characterized in that the non-magnetic material is glass.

11. Process according to one of the preceding claims, characterized in that the material constituting the poles is Sendust or Permalloy.

12. Process according to one of Claims 6 to 11, characterized in that, in the first array of grooves, the grooves of one of the series have a width of approximately 100 µm and the grooves of the other series have a width of approximately 50 µm.

13. Process according to one of Claims 8 to 12, characterized in that, in the second array of grooves, the grooves have a width of approximately 75 µm.

14. Process according to one of the preceding claims, characterized in that the winding wires are deposited by electrolysis.

15. Multitrack magnetic head, characterized in that it includes in succession: a layer of thin-film poles (13, 19, 25) made of magnetic material, a first layer of studs made of magnetic material having a permeability lower than that of the material constituting the poles (5, 16, 22), separated by non-magnetic material (6, 18, 24), a second layer of studs made of magnetic material similar to that of studs of the first layer (11, 21, 22), a thick solid layer of magnetic material similar to that of studs of the first layer (7, 21, 27), and winding wires (R, C) surrounding the said thick solid layer.
